# EUROPEAN PATENT SPECIFICATION

(11) **EP 0 959 526 B1**
(45) Date of publication and mention of the grant of the patent: **13.10.2004**
(21) Application number: 99303785.2
(22) Date of filing: 14.05.1999
(51) Int. Cl.: H01R 4/00, B29C 65/34

(54) **Joining components of thermoplastic resin by fusion**
Verbinden durch Aufschmelzen von Bauteilen aus thermoplastischem Harz
Liaison par fusion de pièces en résine thermoplastique

(30) Priority: 15.05.1998 JP 13284098
(43) Date of publication of application: 24.11.1999
(73) Proprietor: Munekata Co., Ltd., Fukushima-shi (JP)
(72) Inventor: Ito, Takeshi, Fukushima-shi, Fukushima-ken (JP); Sakuma, Hideaki, Fukushima-shi, Fukushima-ken (JP)
(74) Representative: King, James Bertram

(56) References cited:
- DE-A- 4 336 293
- GB-A- 800 820
- US-A- 3 199 388

## Description

This invention relates to a method for joining components of thermoplastic resin by a heat fusion process and to an apparatus for carrying out the method.

Methods are known wherein an electrical resistance heating element is located between two thermoplastic moulded products which are to be connected by fusion with a fusing current then being applied whereby the parts are locally melted and thus joined.

A method of this kind is disclosed in EP 0 823 321 A1

This method is, in practice, extremely effective for bonding parts together due to the simple installation and the lack of detrimental effects on the intemal parts and on the outside appearance of the article mainly because the method uses an instantaneous application of heat.

In the aforementioned publication electrodes are inserted into apertures to make contact with the resistance heating element and to supply the fusing current. According to this method, the resistance heating element is not externally visible.

In GB800820 a heating wire is supported between two electrodes with cooling airflow being externally applied. In DE4336293 a heating wire is supported between two electrodes through which air is passed. In neither case is there contact between rod electrodes which are pressed against the heating wire.

In order to obtain good electrical an adequate pressure force needs to be applied on the electrode. For example a force of some 3×10⁶ N/M² (3 N/mm²) is used and applied to the electrode. A problem can occur in that when the resistance element heats up the resin surrounding the point of electrode contact can melt and the electrode then can become buried into the plastic or the article can become deformed. Poor electrode contact can result

A way of avoiding this problem is to make the wall thicker to avoid deformation. However in many cases this can not be done due to the nature of the product particularly where the product is thin.

An object of this invention is to provide a method and apparatus wherein the electrode can be applied with sufficient contact pressure to the resistance heating element but without locally deforming the product. A further object of this invention is to provide a fusion method which does not require a special construction for the product or the resistance heating element and moreover where the current can be without a difficult balance adjustment between the fusion time and the electrode pressure.

According to this invention there is provided a method as defined in Claim 1.

In accordance with this invention there is also provided an apparatus as defined in Claim 3.

This invention is further described and illustrated with reference to the drawings showing embodiments by way of examples. In the drawings:
- Fig. 1A: show a perspective view of a fusing current applying electrode,
- Fig. 1B: shows a cross section of the electrode of Fig. 1A,
- Fig. 1C: shows and end view of the electrode of Fig. 1A,
- Fig. 2: shows an electrode unit assembly,
- Fig. 3: shows the thermal fusion of a first embodiment,
- Fig. 4: shows in plan view of the embodiment of Fig. 3,
- Fig. 5: shows a detail view in cross section of the fusing current applying electrode in contact with the resistance heating element, and
- Fig. 6: shows the thermal fusion of a second embodiment.

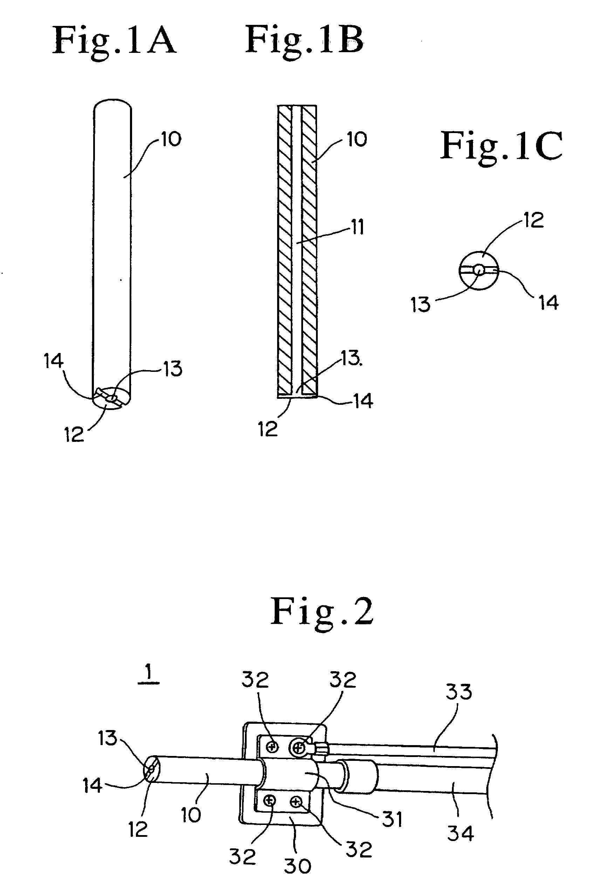

In a first embodiment and referring to the drawings Fig. 1A shows an overall view of a fusing current applying electrode 10, Fig. 1B shows a cross sectional view of a fusing current applying electrode 10 and Fig. 1C Shows an end view looking at the contact face 12 of the fusing current applying electrode 10. The material of the fusing current applying electrode 10 in the present embodiment comprises a copper rod of 3mm diameter with a vent duct 11 of 1 mm diameter extending axially along the centre. The material from which the fusing current applying electrode 10 is formed need not be copper as long as the material is of high conductivity and of high abrasion resistance.

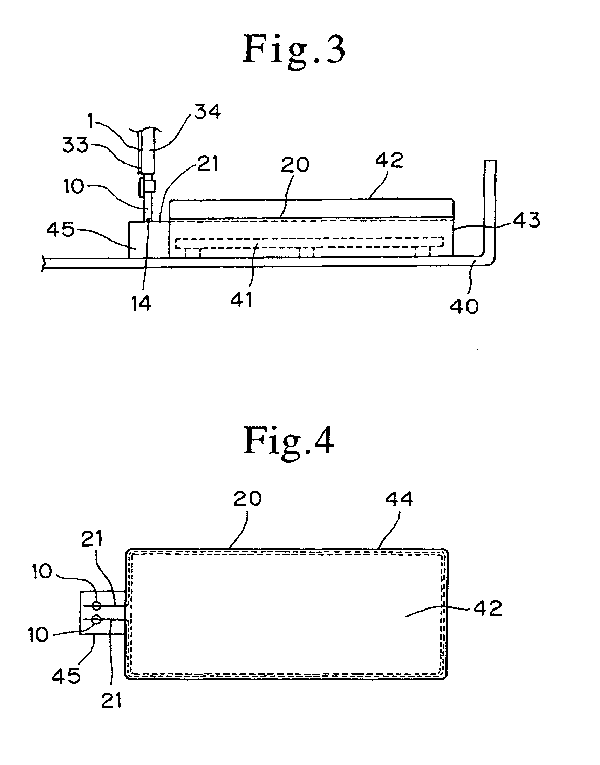

A groove 14 for exhausting to the outside the cooling gas which is fed through the opening 13 of vent duct 11 is provided in the contact face 12 where the fusing current applying electrode 10 contacts the resistance heating element 20, 21 (see Fig. 3). Particularly for the case where the resistance heating element 20 is a flat strip the said groove 14 is effective for enhancing the cooling effect. The contact improves if the contact face 12 is shaped in a concave fashion to conform with and accommodate the resistance heating element 20

Fig. 2 shows the electrode unit 1 with the fusing current applying electrode 10 mounted on a mounting plate 30 using an insulation material. The mounting onto the mounting plate 30 is effected in a secure manner using a fitting 31 and by means of screws 32 using a clamp shaped metal fitting 31 embracing the outside circumference of the fusing current applying electrode 10. The metal fitting 31 and the fusing current applying electrode 10 are in electrical contact. An electric cable 33 supplying the current is secured by one or more of the screws 32. By this means current is fed to the fusing current applying electrode 10.

A tube 34 supplying cooling gas to the duct 11 is fitted to the other end portion of the fusing current applying electrode 10. The other end of this tube 34 is connected to the supply source of the cooling gas via an electromagnetic valve for opening and closing the supply and for adjusting the flow rate through a throttle valve (not shown in the drawings) of the cooling gas.

In a second embodiment illustrated in Figs. 3 to 5 the method uses the fusing current applying electrode 10 of this invention to contact a portion 21 of resistance heating element 20 protruding out of the article to be fused and uses the electrode assembly 1 previously described in conjunction with the first Embodiment.

Fig. 3 shows the mounting of a cover 42 on an electrical circuit board assembly 41 to form a protective enclosure by using heat fusion after locating the electric circuit 41 into a casing body 40 which has been moulded from a polycarbonate (PC) material being a thermoplastic resin. A peripheral side wall 43 which is integrally moulded with the casing body 40 surrounds the electric circuit board 41 and is provided around the outside circumference of the electric circuit board 41. A peripheral groove 44 into which an electric resistance heating element 20 is located is provided on the fusion face being the top surface of the side wall 43. Attached to a part of the wall 43 is a receptacle base 45 for holding the part 21 to which current is to be supplied by the resistance heating element 20.

T o effect the fusion, the resistance heating element 20 is fitted into the said peripheral groove 44 and a current is applied to the contact portions 21 which form the ends of the resistance heating element 20. These ends are arranged in such a way that they may protrude outside the cover 42 over the top face of a base 45. A peripheral rib (not shown in the figure) formed on the joint face of cover 42 is located into the said peripheral groove 44. Fig. 4 shows a plan view of the cover 42 from the top.

The fusing current applying electrodes 10 of two electrode units 1 shown in Figs. 1 to 2 are contacted respectively with the contacts 21 of resistance heating element 20 and a pressure of some 3×10⁶ N/M² (3 N/mm²) is applied to the resistance heating element 20 for establishing the contact between the resistance heating element 20 and the fusing current applying electrode 10. The pressure is applied separately with an adequate force by use of pressure plate so that the joint faces of cover 42 and rib 43 may be fused and firmly connected to the bottom of the casing body 40.

Simultaneously 12 Volts ac is applied by means of the electric cables 33 connected to the two electrode units 1 whilst pressure is maintained. The electromagnetic valve is opened for sending to the tube 34 the cooling gas via the throttle valve regulating the flow rate to an adequate required level. The gas blows across the resistance heating element 20, 21 from the opening 13 having passed through the vent duct 11 of the fusing current applying electrode 10. In the present embodiment, the cooling gas was set to the flow rate of 30 litres (m³) per second.

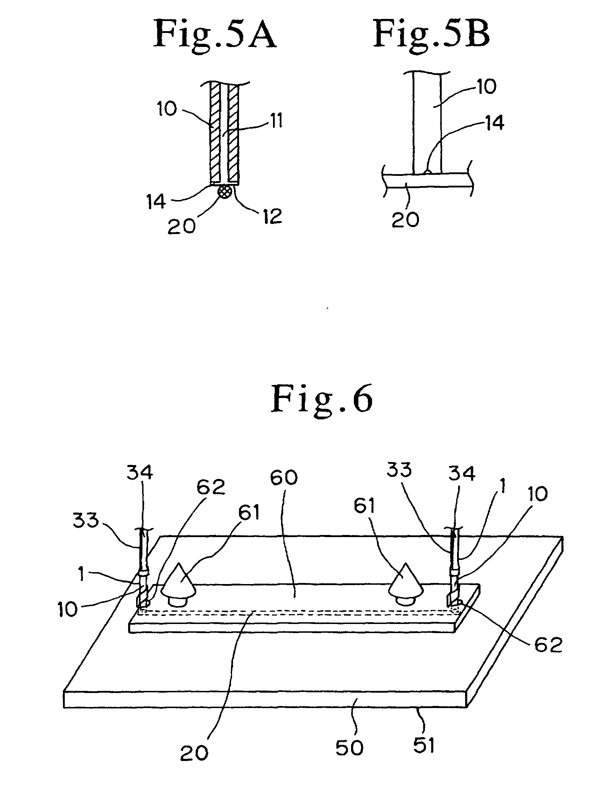

Fig. 5A shows a detail cross sectional view of the contact portion between the fusing current applying electrode 10 and the resistance heating element 20 while Fig. 5B shows the external view. The cooling gas which exhausts from the opening 13 of vent duct 11 passes out of the gap between the groove 14 and the contact face 12 and between the resistance element 20 arranged on the contact face 12 and achieves cooling of the resistance element 20.

After a defined time has passed since the application of the current, typically 4.0 seconds, the current is switched off and at the same time the cooling gas flow is stopped by use of the electromagnetic valve.

As a result, the temperature for the base 45 and the resistance heating element 20 which is in contact are held below 100° C due to the effect of the cooling gas flow. This temperature should be held below lower than 140° C which is the thermal deformation temperature of the polycarbonate resin (PC). Thus the receptacle base 45 is not deformed and the contact between the fusing current applying electrode 10 and the resistance heating element 20 can be securely made.

As a comparison the thermal fusion was conducted using the same electrode unit 1 as that described with the same case body 40 moulded from the specified thermoplastic resin. However, in the comparison, the blowing of the cooling gas was not carried out during the current application. As a result the receptacle base 45 was deformed by the heat and the resistance heating element 20 was bent by the pressure applied to the electrode unit 1. Finally the fusing current applying electrode 10 was separated from the resistance heating element 20 making it impossible to apply current. Therefore, the fusion could not be completely achieved, and the satisfactory fusion strength could not be obtained.

A further embodiment avoids harmful effects on the external appearance of the product subject to the heat fusion and after the thermally fusing current has been applied to the moulded product.

Moulded products are used increasingly for the exterior of automobiles in view of the lighter weight. Fig. 6 shows an explanatory view for applying a thermal fusing current using the resistance heating element 20 applied to a reinforcement plate 60 made of polypropylene that has an integral moulded hook 61 for mounting the reinforcement to a vehicle body and mounted with a moulded exterior part 50 of polypropylene resin. For enhancing the design property a lustrous coating has been applied to the exterior face 51 of moulded part 50.

If the temperature on the rear face should become higher than necessary due to the thermal fusion during the product fusion process as mentioned above, then the product face swells. Particularly when the lustre treatment has been provided on the product face 51, this swelling becomes conspicuously.

To overcome this the problem can be solved if the fusing current applying electrode 10 according to this invention is used.

The fusion method is to be explained now: the insertion aperture 62 for inserting the fusing current applying electrode 10 into the reinforcement plate 60 is provided in the vicinity of both the ends of resistance heating element 20. The aperture 62 should preferably be of such a size that the cooling gas can be blown out of the fusing current applying electrode 10 can be exhausted to the outside.

First, after trapping the resistance heating element 20 between the moulded product exterior 50 and the reinforcement plate 60, the fusing current applying electrode 10 of electrode unit 1 according to this invention is contacted with each end of the resistance heating element 20 while pressure is applied to the reinforcement plate 60 with an appropriate force. Next, the current is applied by the electric cables 33 and the cooling gas is supplied to the fusing current applying electrode 10 through the tube 34 and blown onto the portion 21 of resistance heating element 20.

After the lapse of a stipulated period of fusion time, the voltage impression was stopped as was the supply of the cooling gas.

When the above mentioned fusion process finished is was confirmed that there was no heat effects on to the rear face 51 of the product

In addition to the above mentioned embodiments, the fusing current applying electrode according to this invention can optionally control the temperature rise of the portion of the resistance heating element to which current is supplied by changing the flow rate of the cooling gas blown from the vent duct. In addition, because the cooling gas is blown out, this embodiment also has the effect of removing any contaminants adhering to the area in which the current is impressed. Although the cooling gas is stopped together with the current application in this embodiment, the effect can be increased more in case of Embodiment 2 if the cooling gas blowing is continued for a short time.

For information, the air was used as the cooling gas in the said embodiment, but it is also possible to use an inactive gas such as Nitrogen instead of the air, or a gas that has been cooled down below ambient temperature. An external injection nozzle can be positioned adjacent to the current applying electrode to inject the cooling gas.

If the thermal fusion is effected using the fusion method and the electrode relating to this invention as described above, the temperature rise of the portion to which current is supplied and which is highest can be reduced to a level lower than the resin fusion temperature. The following effects can be obtained:
1. Because the portion of the resistance heating element which is not subject to fusion is cooled then such portion does not become deformed and the contact between the resistance heating element and the fusing current applying electrode can be made more positive.
2. Because the resin around the current applying portion of the resistance heating element does not become hot enough to become fused the structure can be designed more easily.
3. The influence of the thermal fusion does not appear on the product face of moulded product and excellent thermal fusion can be obtained.
4. The temperature rise of the current application portion can be controlled by the adjustment of flow rate and temperature of the cooling gas.
5. Because any contaminants adhering to the resistance heating element can be removed by the cooling gas poor contact of the electrodes can be prevented.
6. Because the cooling gas passes through the interior of the fusing current applying electrode, the fusing current applying electrode itself can also be cooled down and the stable thermal fusion can be obtained without any temperature rise in the fusing current applying electrode even in fast production cycles.

## Claims

1. A method for connecting together two parts (42, 43) formed of thermoplastic materials using a heat fusion process, wherein an electric resistance heating element (20, 21) is located between the parts which are brought together under pressure after which an electric current is passed through the said element by applying under pressure and contact faces (12) of rod electrodes (10) to the heating element ends (21) for the purpose of heating the element to melt and fuse the parts together at their junction, **characterised in that** a cooling gas flow (11, 13) is discharged at the contact faces (12) of the electrode rods (10) from a duct (11) extending through the electrode rods (10).

2. A method in accordance with claim 1, **characterised in that** cooling gas discharges laterally through a groove (14) in the contact faces of the rods (10).

3. An apparatus for connecting together two parts (42, 43) formed of thermoplastic materials using a heat fusion process, wherein an electric resistance heating element (20, 21) is located between the parts, means being provided to bring the parts together under presssure, means being provided for applying end contact faces (12) of rod electrodes (10) to contact under pressure the heating element ends (21) after which an electric current passed through the rod electrodes (10) for the purpose of heating the element to melt and fuse the parts together at their junction, **characterised in that** the rod electrodes (10) include a duct (34, 11, 13, 14) through which a cooling gas flows with a discharge outlet (13) at the end contact face (12) of the electrode (10).

4. An apparatus in accordance with claim 3, **characterised in that** the rod electrodes (10) comprise an electrically conductive rod with an axial bore forming said duct.

5. An apparatus in accordance with claim 4, **characterised in that** the axial bore is connected to a supply of gas at one end through a flow control means, the other discharge end of the bore (13) having a groove (14) forming a diffuser directing gas at the zone of contact between the contact face of the electrode (10) and heating element end (21).

6. An apparatus in accordance with claim 3 or 4 or 5, **characterised in that** the contact face (18) of the electrode (10) is shaped to conform with the profile of the heating element (20,21).

## Patentansprüche

1. Verfahren zum Vereinigen von zwei Teilen (42,43) aus thermoplastischem Kunststoff unter Anwendung von Wärme und Kraft, bei dem ein elektrisches Widerstandsheizelement (20,21) zwischen den unter Druck zusammengefügten Teilen angeordnet ist, wonach ein elektrischer Strom das Element durchströmt und Endkontaktflächen (12) von Stabelektroden (10) mit Druck an die Enden (21) des Heizelementes gelegt werden zwecks Erwärmung des Heizelementes, um dadurch die Teile an ihren Fügeflächen in plastifiziertem Zustand zusammenzufügen, **dadurch gekennzeichnet, dass** Kühlgas (11) auf die Kontaktflächen (12) der Stabelektroden (10) aus einem sich durch die Elektrodenstäbe (10) hindurch erstreckenden Kanal (11) ausgebracht wird.

2. Verfahren nach Anspruch 1, **dadurch gekennzeichnet, dass** das Kühlgas seitlich durch eine Nut (14) in den Kontaktflächen der Stäbe (10) austritt.

3. Gerät zum Vereinigen von zwei Teilen (42,43) aus thermoplastischem Kunststoff unter Anwendung von Wärme und Kraft, in dem ein elektrisches Widerstandsheizelement (20,21) zwischen den Teilen angeordnet ist, und Mittel zum Zusammenfügen der Teile unter Druck vorgesehen sind sowie Mittel, mit denen die äußersten Enden der Kontaktflächen (12) der Stabelektroden (10) die Enden des Heizelementes (21) unter Druck berühren, wonach die Stabelektroden (10) von einem elektrischen Strom durchflossen werden, um das Heizelement zu erwärmen, so dass die Teile an ihren Fügeflächen in plastifiziertem Zustand zusammengefügt werden, **dadurch gekennzeichnet, dass** die Stabelektroden (10) einen Kanal (34,11,13,14) aufweisen, durch den ein Kühlgasstrom über eine Austrittsöffnung (13) an der Endkontaktfläche (12) der Elektrode (10) ausgebracht wird.

4. Gerät nach Anspruch 3, **dadurch gekennzeichnet, dass** die Stabelektroden (10) einen elektrischen leitenden Stab mit einer den Kanal bildenden axialen Bohrung aufweisen.

5. Gerät nach Anspruch 4, **dadurch gekennzeichnet, dass** die axiale Bohrung an einem Ende mit einer Gasquelle über ein Stromventil verbunden ist und das andere Ausbringende der Bohrung (13) eine einen Diffuser bildende Nut (14) aufweist, über den das Gas auf den Berührungsbereich zwischen den Endkontaktflächen der Elektrode (10) und dem Ende des Heizelementes (21) geleitet wird.

6. Gerät nach Anspruch 3 oder 4 oder 5, **dadurch gekennzeichnet, dass** die Kontaktfläche (18) der Elektrode (10) in ihrer Form an das Profil des Heizelementes (20,21) angepasst ist.

## Revendications

1. Procédé pour connecter ensemble deux pièces (42, 43) formées en matériaux thermoplastiques par un processus de thermofusion, selon lequel un élément chauffant à résistance électrique (20, 21) est placé entre les pièces qui sont réunies sous pression, après quoi un courant électrique est envoyé à travers ledit élément par application, sous pression, des faces de contact d'extrémité (12) des électrodes de soudage (10) aux extrémités de l'élément chauffant (21), dans le but de chauffer l'élément pour fondre et fusionner ensemble les pièces à leur point de jonction, **caractérisé en ce qu'**un débit de gaz de refroidissement (11, 13) est déchargé au niveau des faces de contact (12) des électrodes de soudage (10) depuis un conduit (11) qui se prolonge à l'intérieur des électrodes de soudage (10).

2. Procédé selon la revendication 1, **caractérisé en ce que** le gaz de refroidissement se décharge latéralement à travers une rainure (14) pratiquée dans les faces de contact des électrodes (10).

3. Appareil pour connecter ensemble deux pièces (42, 43) formées en matériaux thermoplastiques en utilisant un processus de thermofusion, selon lequel un élément chauffant à résistance électrique (20, 21) est placé entre les pièces, des moyens étant prévus pour réunir les pièces ensemble sous pression, des moyens étant prévus pour appliquer les faces de contact d'extrémité (12) des électrodes de soudage (10) pour qu'elles entrent en contact, sous pression, avec les extrémités des éléments chauffants (21), après quoi un courant électrique est envoyé à travers les électrodes de soudage (10) dans le but de chauffer l'élément pour fondre et fusionner ensemble les pièces au niveau de leur jonction, **caractérisé en ce que** les électrodes de soudage (10) incluent un conduit (34, 11, 13, 14) à travers lequel circule un gaz de refroidissement, avec un orifice de décharge (13) au niveau de la face de contact d'extrémité (12) de l'électrode (10).

4. Appareil selon la revendication 3, **caractérisé en ce que** les électrodes de soudage (10) comprennent une tige conductrice d'électricité pourvue d'un alésage axial qui forme ledit conduit.

5. Appareil selon la revendication 4, **caractérisé en ce qu'**une extrémité de l'alésage axial est connectée à une alimentation en gaz par l'intermédiaire de moyens régulateurs de débit, l'autre extrémité (côté décharge) de l'alésage (13) étant pourvue d'une rainure (14) qui forme un diffuseur, lequel dirige le gaz vers la zone de contact comprise entre la face de contact de l'électrode (10) et l'extrémité (21) de l'élément chauffant.

6. Appareil selon la revendication 3, 4 ou 5, **caractérisé en ce que** la face de contact (12) de l'électrode (10) est façonnée de sorte à s'adapter au profil de l'élément chauffant (20, 21).
